# EUROPEAN PATENT SPECIFICATION

(11) **EP 0 678 085 B1**
(45) Date of publication and mention of the grant of the patent: **09.12.1998**
(21) Application number: 94904777.3
(22) Date of filing: 07.01.1994
(51) Int. Cl.: C05F 9/04, B03B 5/52, B03B 9/06, B04C 5/00

(54) **TREATMENT OF COMPOSTED ORGANIC MATERIAL**
BEHANDLUNG KOMPOSTIERTER ORGANISCHER MATERIALIEN
TRAITEMENT DE MATIERES ORGANIQUES COMPOSTEES

(30) Priority: 08.01.1993 NL 9300041
(43) Date of publication of application: 25.10.1995
(73) Proprietor: Arcadis Heidemij Realisatie B.V., 6800 AC Arnhem (NL)
(72) Inventor: ELSINGA, Willem, NL-3853 JA Ermelo (NL); BRUMMELER, Erik, NL-5256 BE Heusden (NL); PRUIJN, Marcus, Fredericus, NL-3532 EZ Tilburg (NL)
(74) Representative: Van Someren, Petronella F. H. M.
(86) International application number: NL9400005
(87) International publication number: WO9415892

(56) References cited:
- EP-A- 0 228 724
- WO-A-90/11144
- FR-A- 2 160 528
- US-A- 4 079 837

## Description

The invention relates to a method for separating sand and optionally contaminants like heavy metals from composted organic material. The invention further relates to a method for removing heavy metals from compost or a fraction thereof.

An increasing amount of waste is being collected separately. Organic waste, for example vegetable, fruit and garden waste (so-called VFG waste) or the organic fraction of domestic waste is also more and more frequently composted. However, the usual drawbacks are associated with this composted material.

Compost made from organic waste contains in addition to organic constituents (about 30-40%) also a large portion of mineral constituents, such as for example sand. This is particularly the case with compost produced from VFG waste, which, because of its origin, often contains about 50 to 75% sand. This relatively large sand portion of course entails high costs for transporting the compost, for instance to processing locations.

In addition, due to the continually growing supply of compost the sale thereof is becoming increasingly more difficult. Increasingly greater demands are made of the product in respect of composition, degree of contamination, in particular heavy metals, and the like. These demands will probably only become exacting in the future. Such demands can make more difficult the sale of "ordinary compost" which does not comply with the required specifications.

EP-228724 discloses a method for separating for example sand from material that is still to be composted.

FR-2.160.528 relates to a method for separating glass fragments from compost in a dry separation process.

The invention now has for its object to provide a method with which the composition of the compost can be adapted to the demands required thereof.

This is achieved by the invention with a method for treating composted organic material, comprising:
a) separating the composted material to size to obtain at least two fractions; and
b) subsequently separating at least one of the fractions according to mass to obtain at least two sub-fractions, wherein the separation according to mass is performed by means of a hydrocyclone.

Understood in this application by "composted organic material" is any material which contains organic constituents and is wholly or partially composted in aerobic or anaerobic manner. The method according to the invention is for example particularly suitable for treating compost produced from vegetable, fruit and garden waste (VFG waste) or from the organic fraction of domestic waste. It is likewise possible to reduce the material in size prior to the treatment.

The steps a) and/or b) are preferably repeated one or more times with the sub-fractions.

It has also been found that with the method according to the invention it is possible to remove heavy metals from compost. The heavy metals are found to collect in specific fractions, such as the finer light or finer heavy fractions. By selecting a suitable treatment schedule the heavy metals can be concentrated as far as possible in a specific fraction.

Separation on the basis of size can be carried out by means of sieving. Wet or dry compost can be used herefor. The sieve size can be chosen as desired.

Separation of the compost into fractions on the basis of mass is performed by means of using a hydrocyclone. With such a hydrocyclone the compost in the form of a slurry is supplied tangentially to the cyclone. Due to the action of the centrifugal force the underflow of the cyclone contains mainly the heavier fraction, such as sand and other mineral constituents, while the overflow contains mainly the lighter, mainly organic constituents.

Another possibility for separating the compost according to mass in the method of removing heavy metals is the use of gravitational (= by means of gravity) separation techniques. The separation is then based on differences in specific gravity between for example sand and organic material. In general the density of sand is approximately 2600 kg/m³, while the density of the organic material amounts to a maximum of 1400 kg/m³. In gravitational separation techniques use is therefore made of this difference to enable separation of for instance a sand fraction from the compost, whereafter a fraction with organic constituents remains.

Another technique which can be used in the method of removing heavy metals for separating according to mass is sedimentation. A slurry is likewise used in this case. The heavy fraction settles to the bottom of a sedimentation tank, while the light, organic constituents are carried away with water for instance over the edge of the tank. It is possible for example to remove the heavy fraction from the sedimentation tank by means of a worm conveyor.

Other separation methods are also possible, as long as a good separation is obtained between the desired fractions.

Through the treatment of the compost the above stated disadvantages of transport costs are on the one hand reduced, while on the other hand the end product is improved. The quantity of organic constituents per unit of volume is larger after removal of the sand whereby a better quality product is obtained. In addition, the separated sand fraction can be used again. The compost can be used for instance as peat replacement or other high-grade applications.

The fractions resulting from the method according to the invention can, after the treatment, also be mixed together in any desired proportion to obtain a compost with the required properties.

The present invention will be illustrated with reference to the annexed drawing, in which:
figure 1 is a schematic representation of the method according to the invention, which makes use of sedimentation;
figure 2 is a schematic representation of the method according to the invention by means of a hydrocyclone; and
figure 3 shows a schematic outline of a possible treatment procedure according to the invention.

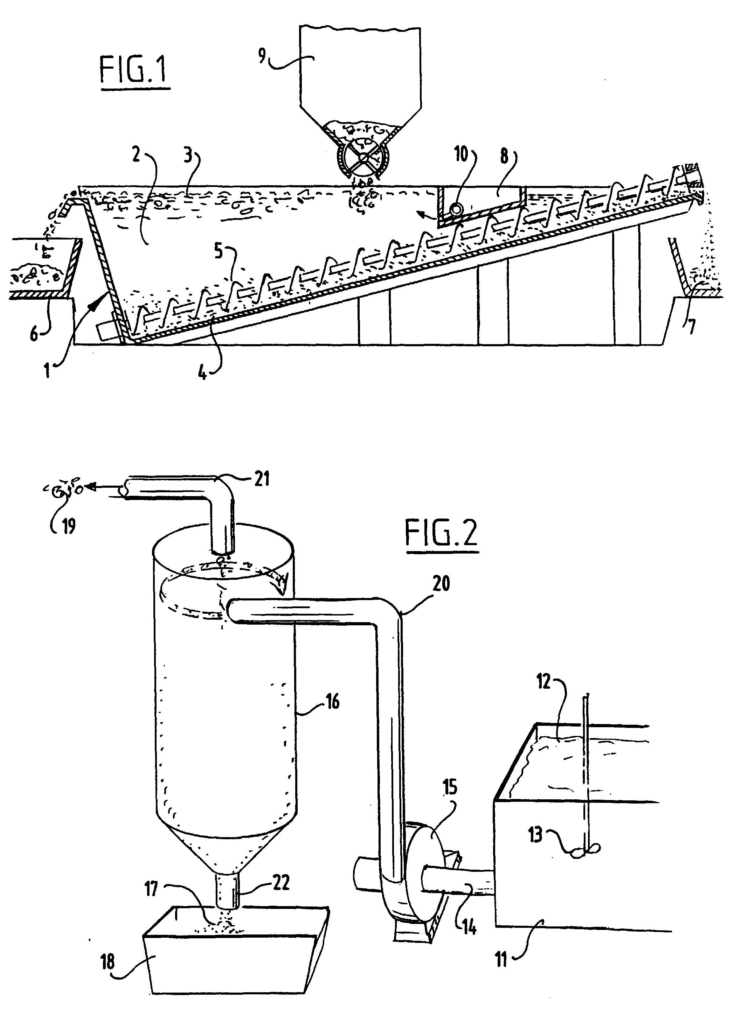

Shown in figure 1 is a sedimentation tank 1 in which a compost slurry 2 is contained. A liquid, for example water, is continuously carried into the tank via a feed bin 8 and a feed conduit 10 arranged therein. The compost can optionally be supplied via a supply tank 9. The water in the tank will flow slowly and carry with it the lighter organic constituents which do not settle rapidly, while the heavier material 4, such as sand, settles in the tank. The sand can be continuously removed from the sedimentation tank by means of a worm conveyor 5. The sand is subsequently collected in a container 7. The organic constituents 3 float over the edge of the sedimentation tank 1 and fall into a receiving tank 6.

Figure 2 shows a second embodiment of the invention. The compost is fed from a supply container 11 in which it is held in the form of a slurry 12. Situated in supply container 11 is an agitator 13 for mixing the compost with a liquid, for example water. Via conduit 14 the compost is supplied from the container to a pump 15 and then via a conduit 20 to a hydrocyclone 16. In hydrocyclone 16 the slurry is cycloned, wherein the sand fraction 17 falls via a pipe 22 as underflow of the hydrocyclone into a receiving bin 18. On the upper part of the hydrocyclone the organic constituents 19 leave the cyclone via a pipe 21.

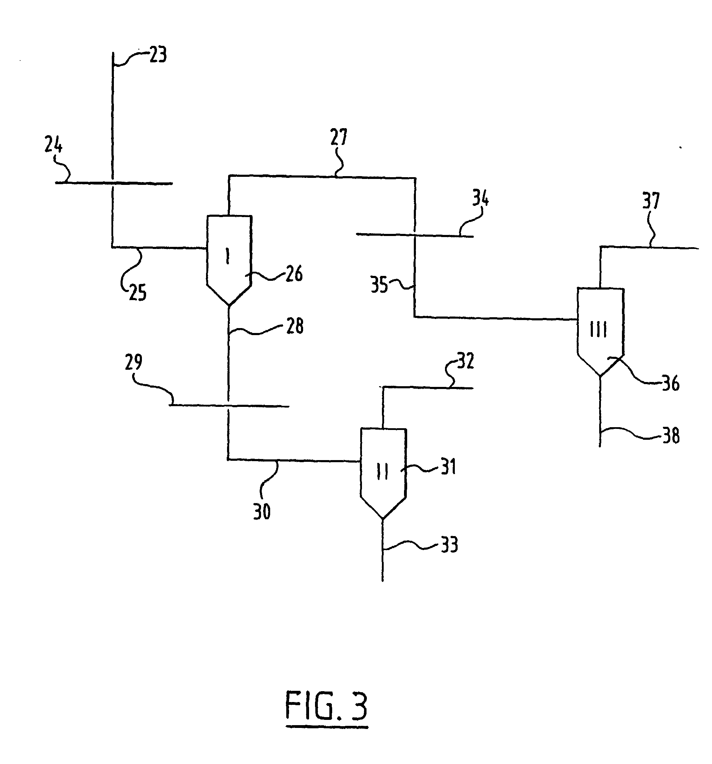

Figure 3 shows a possible treatment schedule according to the invention. The compost is supplied at 23 to a sieve 24. Sieving takes place to about 10 mm, whereby the large constituents such as branches, stones, lumps of compost, paper, plastic, glass and the like are removed. The compost fraction 25 which goes through the sieve (the largest part) is then supplied to a first hydrocyclone 26. The hydrocycloning results in an overflow 27 and an underflow 28. Both sub-fractions are sieved again on the respective sieves 34 and 29 with a sieve size of about 0.5 mm and 1 mm respectively. The sieved fractions 35 and 30 herein released are subsequently treated in hydrocyclones 36 and 31 respectively, which results in overflows 37 and 32 and underflows 38 and 33. Fraction 37 contains the lightest and finest material.

The invention will be further illustrated with reference to the examples below.

### EXAMPLE 1

### Hydrocycloning VFG compost.

The test was performed with 100 litres of compost. The sand content of this compost is equated in this example with the calcined residue, that is, the portion of the dried material remaining after heating to 650°C. The portion of the compost which disappears at this temperature through evaporation and combustion is considered as the organic constituents. The tested compost and the products derived therefrom thus always consist of three components, namely sand, organic constituents and water.

The sample used was found to have a dry substance content of 86%. The sand content of this dry substance was 77.8%.

A compost slurry was prepared by mixing the compost with water in a predetermined ratio. In this test three different ratios were tested. The slurry formed in this manner was then guided through a hydrocyclone. The overflow and the underflow, after hydrocycloning, the compost residue (organic material) and the residual sand were analyzed.

The results are shown in table 1. In this table the following terms have the following denotations.

The "dry substance content" indicates how much of the sample remains when all the water has evaporated.

The "calcined residue" is the portion of the dry substance remaining after heating to 650°C. In this test the calcined residue is equated with the sand content.

The "organic matter content" is in this case the portion of the dry substance that has disappeared from the sample after heating to 650°C.

The "ratio of organic matter/sand" indicates the ratio of these two components to each other in the sample. A higher ratio indicates an enrichment in organic material and thus signifies a product of better quality.

The "distribution of the sand mass" indicates how much of the initial quantity of sand has gone into a product during the test. This distribution preferably lies as far as possible in the direction of the sand residue.

The "distribution of the organic matter" indicates how much of the initial amount of organic matter has passed into a product. Preferably as little organic material as possible finds its way into the sand residue. This distribution must therefore be as low as possible.

**Table 1.**

| **Results of the performed tests** | | | | | | |
|---|---|---|---|---|---|---|
| | CONTENTS IN % | | | RATIO | DISTRIBUTION IN % | |
| | Dry substance | Sand | Org. matter | Org. matter:sand | Sand | Org. matter |
| Test 1 | | | | | | |
| Intake | 6.3 | 77.8 | 22.2 | 0.3 | | |
| Sand residue | 69.1 | 98.9 | 1.1 | 0.0 | 87.0 | 7.3 |
| Compostslurry | 1.5 | 51.5 | 48.5 | 0.9 | 13.0 | 92.7 |
| | | | | | | |

| Test 2 | | | | | | |
|---|---|---|---|---|---|---|
| Intake | 14.8 | 77.8 | 22.2 | 0.3 | | |
| Sand residue | 51.2 | 94.3 | 5.7 | 0.1 | 80.7 | 18.2 |
| Compostslurry | 5.2 | 47.0 | 53.0 | 1.1 | 19.3 | 81.8 |
| | | | | | | |

| Test 3 | | | | | | |
|---|---|---|---|---|---|---|
| Intake | 24.8 | 77.8 | 22.2 | 0.3 | | |
| Sand residue | 62.8 | 93.6 | 6.4 | 0.1 | 69.0 | 19.9 |
| Compostslurry | 12 | 61.9 | 38.1 | 0.6 | 31.0 | 80.1 |
| | | | | | | |

### EXAMPLE 2

### Separation into fractions of basic compost sample.

A basic sample was made up that is representative of the compost composition of the compost commercially available at the moment in for example The Netherlands. For this purpose compost from four different suppliers was mixed. The composition of this basic sample was determined. According to currently applicable standards the basic sample was found to be not clean, that is, there was too much lead and zinc in the compost. A part of the basic sample was used for a wet sieving in order to determine the granule size distribution. It was found herefrom that almost half the material was larger than 1 millimetre. The rest of the basic sample was then dry sieved to 10 millimetres and cycloned. The fraction larger than 10 millimetres consisted of branches, stones, lumps of wet compost, lumps of grey compost, paper, plastic and glass. Measurements showed that the values for the heavy metals in the overflow were higher than was the case in the basic sample, while the underflow was comparatively cleaner. This indicates that the heavy metals are concentrated in the lighter fraction.

The underflow and overflow obtained in this manner were subsequently further separated to try and obtain a relatively clean and a relatively concentrated contaminated sub-fraction. It was found from the concentration distribution of the sub-fractions of the overflow that the concentration of heavy metals decreases in larger particles. The overflow was therefore sieved again. It was found that the sub-fraction falling through the sieve is more heavily contaminated than the fraction which remains lying thereon. This corresponds with the expectation that the contamination collects in the fine fraction.

The present invention provides a compost treatment method with which the compost can be separated into a number of fractions such as sand, clean organic material, contaminated residue, etc. The fractions can be sold separately or mixed in any desired ration.

## Claims

1. Method for separating sand and optionally contaminants like heavy metals from composted organic material, comprising the steps of:
a) separating the composted material to size to obtain at least two fractions; and
b) subsequently separating at least one of the fractions according to mass to obtain at least two sub-fractions, **chracterized in that** the separation according to mass is performed by means of a hydrocyclone.

2. Method as claimed in claim 1, **characterized in that** the steps a) and/or b) are subsequently repeated one or more times with the sub-fractions.

3. Method as claimed in claim 1 or 2, **characterized in that** the separation to size is performed by means of sieving techniques.

4. Method as claimed in any of the claims 1-3, **characterized in that** the compost is reduced in size prior to the separation of the sand fraction.

5. Method for removing heavy metals from compost or a fraction thereof by separating the compost according to mass to obtain a light and a heavy fraction, further separating the more contaminated light fraction according to size into a more contaminated finer light subfraction and a less contaminated larger light sub-fraction.

## Patentansprüche

1. Verfahren zur Abscheidung von Sand und fakultativ von Verunreinigungen, wie Schwermetallen aus kompostiertem organischem Material mit den folgenden Schritten:
a) es wird das kompostierte Material größenmäßig getrennt, um wenigstens zwei Fraktionen zu erhalten; und
b) es wird darauf wenigstens eine der Fraktionen gemäß der Masse aufgetrennt, um wenigstens zwei Unterfraktionen zu erhalten,
dadurch gekennzeichnet, daß die Auftrennung gemäß der Masse durch einen Hydrozyklon durchgeführt wird.

2. Verfahren nach Anspruch 1,
dadurch gekennzeichnet, daß die Schritte a) und/oder b) danach einmal oder mehrmals mit den Unterfraktionen wiederholt werden.

3. Verfahren nach den Ansprüchen 1 oder 2,
dadurch gekennzeichnet, daß die größenmäßige Auftrennung durch Siebtechniken bewirkt wird.

4. Verfahren nach einem der Ansprüche 1 bis 3,
dadurch gekennzeichnet, daß der Kompost zerkleinert wird, bevor die Abtrennung der Sandfraktion erfolgt.

5. Verfahren zur Entfernung von Schwermetallen aus Kompost oder einer Fraktion von Kompost durch Massentrennung des Kompostes, um eine leichte und eine schwere Fraktion zu erhalten, wobei die stärker verunreinigte leichte Fraktion gemäß der Größe aufgeteilt wird in eine stärker verunreinigte feinere leichte Unterfraktion und eine weniger verunreinigte größere leichte Unterfraktion.

## Revendications

1. Procédé pour séparer le sable et éventuellement les contaminants tels que les métaux lourds, à partir d'un matériau organique composté, qui comprend les étapes consistant :
a) à séparer le matériau composté en fonction de sa dimension pour obtenir au moins deux fractions ; et
b) puis à séparer au moins l'une des fractions en fonction de sa masse, pour obtenir au moins deux sous-fractions, caractérisé en ce que la séparation en fonction de la masse est réalisée au moyen d'un hydrocyclone.

2. Procédé selon la revendication 1, caractérisé en ce que les étapes a) et/ou b) sont ultérieurement répétées une ou plusieurs fois avec les sous-fractions.

3. Procédé selon la revendication 1 ou 2, caractérisé en ce que la séparation en fonction de la dimension est réalisée par des techniques de tamisage.

4. Procédé selon l'une quelconque des revendications 1 à 3, caractérisé en ce que le compost subit une réduction de sa dimension avant séparation de la fraction sable.

5. Procédé pour éliminer les métaux lourds d'un compost ou d'une fraction de ce dernier, par séparation du compost en fonction de sa masse pour obtenir une fraction légère et une fraction lourde, puis séparation de la fraction légère la plus contaminée en fonction de sa dimension pour obtenir une sous-fraction légère plus fine et plus contaminée, et une sous-fraction légère plus grossière et moins contaminée.
